Europäisches Patentamt

**European Patent Office**

Office européen des brevets

(19)

(11) Publication number: **0 098 206**

**A2**

(12) # EUROPEAN PATENT APPLICATION

(21) Application number: **83401271.8**

(22) Date of filing: **20.06.83**

(51) Int. Cl.³: **E 06 B 3/80**
**B 23 Q 11/08**

(30) Priority: **28.06.82 US 392585**

(43) Date of publication of application:
**11.01.84 Bulletin 84/2**

(84) Designated Contracting States:
**BE CH DE FR GB IT LI**

(71) Applicant: **KEARNEY & TRECKER CORPORATION**
**11000 Theodore Trecker Way**
**West Allis Wisconsin 53214(US)**

(72) Inventor: **Mattson, Clyde E.**
**530 Hillcrest Drive**
**Waukesha Wisconsin 53186(US)**

(74) Representative: **Martin, Jean-Jacques et al,**
**Cabinet REGIMBEAU 26, Avenue Kléber**
**F-75116 Paris(FR)**

(54) **Flexible strip curtain.**

(57) An improved flexible strip door (28) for sealing the openings into an enclosure such as a coolant and chip enclosure on a machine tool comprises an plurality of flexible strip (32) members which each extend vertically downwardly from the enclosure opening so as to be parallel to and contiguous with each other. Each strip member (32) is fabricated of a pair of elastomeric strips (36a, 36b) which are fastened at their side and bottom edges in face-to-face relationship to create a pocket (38) therebetween having an opening in the top thereof. During intervals when an object is to enter or exit an enclosure opening, the flexibility of each strip (32) allows it to drape on the object to allow passage of the object through the strip door (28). When the opening is to be sealed following passage of an object therethrough, compressed air is forced into the pocket (38) of each strip member (32) to force the strip members (32) downwardly including those which may still be draped on the object, so that the strip members (32) seal the enclosure opening.

FIG. 2

## FLEXIBLE STRIP CURTAIN

## BACKGROUND OF THE INVENTION

This invention relates generally to flexible strip
doors or curtains and more specifically, to an improved
flexible strip door for closing the entrance and exit
openings of an enclosure, such as a machine tool coolant
and chip enclosure without the need for complex door opening and closing mechanisms.

In the production of machined parts, and especially in the production of machined parts by milling and machining centers, coolant is often sprayed on the part during each machining operation to help reduce the friction between the cutting tool and the workpiece so as to reduce tool and workpiece heating thereby achieving prolonged tool life. In addition, coolant is also sprayed on the workpiece at the completion of the last machining operation so any chips which may still remain on the workpiece following the completion of the last machining operation may be disbursed prior to removal of the workpiece from the milling or machining center.

While spraying the workpiece with coolant is very advantageous, care must be taken so that coolant is not sprayed on the floor or other areas of operator contact since the coolant tends to make such surfaces very slippery so as to create a risk of operator injury. To prevent the coolant as well as chips from being disbursed beyond the immediate space surrounding workpiece and machine tool spindle, present day milling and machining centers are often provided with a coolant and chip enclosure which encompases the space surrounding the machine tool spindle. In the past, such chip and coolant enclosures have been provided with panel-type entrance and exit doors which are automatically opened and closed when a workpiece is shuttled into and out from the enclosure, respectively. The automatic opening and closing mechanisms employed to open and close each of the coolant and chip enclosure panel doors are typically very complex and costly in that such mechanisms usually include a prime mover such as an electric motor or hydraulic cylinder and one or more intermediate assemblies for coupling the prime mover to the chip enclosure panel door.

To avoid the need for complex and costly mechanisms to open and close the machine tool coolant and chip enclosure doors, substitution of flexible strip doors or curtains for such panel doors has been proposed. Such flexible strip curtains, which usually consist of a plurality of parallel, closely spaced flexible strip members which extend vertically downwardly from the top of a coolant and chip enclosure opening, serve to close the coolant and chip enclosure opening yet enable an object to pass into and out of the coolant and chip enclosure with relative ease. The disadvantage associated with employing flexible strip curtains to seal the entrance and exit passages or openings of a machine tool coolant and chip enclosure is that the flexible strip members of each passage are likely to remain draped on the workpiece as the workpiece passes through. Only when the workpiece has been moved from the chip enclosure a distance slightly greater than the length of the flexible strip members of each curtain will the flexible strip members fall back into vertical alignment with each other. While the flexible strip members remain draped on the workpiece during workpiece passage through the coolant and chip enclosure openings, the flexible strip members fail to function effectively.

The present invention concerns an improved flexible strip curtain especially adapted for use on a machine tool coolant and chip enclosure.

It is thus an object of the present invention to provide an improved flexible strip curtain for use over the entry and exit passage of a machine tool coolant and chip enclosure which eliminates the need for a door opening and closing mechanism.

It is yet another object of the present invention to provide an improved flexible strip curtain for a machine tool coolant and chip enclosure which facilitates workpiece movement into and out of the coolant and chip enclosure while providing a closure across the coolant and chip enclosure opening during intervals other than when a workpiece is passing therethrough.

## BRIEF SUMMARY OF THE INVENTION

Briefly, in accordance with the preferred embodiment of the invention, there is provided an improved flexible strip curtain for obstructing the opening of an enclosure such as a machine tool coolant and chip enclosure while allowing the passage of a workpiece therethrough without the need for an automatic door opening and closing apparatus. It includes a plurality of flexible strip members depending from a support, such as a hollow pipe, extending across the enclosure opening. Each flexible strip member is configured of a pair of impermeable strips which are sealed at their bottom and side edges in face to face relationship so as to create a pocket therebetween which is open at the upper end. Extending downwardly into the pocket between the two strips of each strip member is a pipe nipple that is in communication with the hollow pipe. During intervals other than when an object is passing through the opening into or out of the enclosure, compressed air is forced through the hollow pipe supporting the strip members and through the nipple extending into the strip member pocket to fill the pocket with air. The admission of air into the pockets forces the strip to straighten and therefore move vertically downwardly. Those strips which may have remained draped across a workpiece are shifted to clear and move into their normal vertical position in the workpiece.

## BRIEF DESCRIPTION OF THE DRAWINGS

The features of the invention believed to be novel are set forth with particularity in the appended claims. The invention itself, however, both as to organization and method of operation, together with further objects and advantages thereof may best be understood by reference to the following description taken in conjunction with the accompanying drawings in which:

Figure 1 is a perspective view of a numerically controlled machining center having a coolant and chip enclosure thereon embodying the flexible strip curtain of the present invention;

Figure 2 is an enlarged view of a portion of the coolant and chip enclosure illustrated in Figure 1 depicting the details of the flexible strip curtain of the present invention; and

Figure 3 is a detailed view in vertical section taken along the plane represented by lines 3-3 of Figure 2.

## DETAILED DESCRIPTION OF THE PREFERRED EMBODIMENT

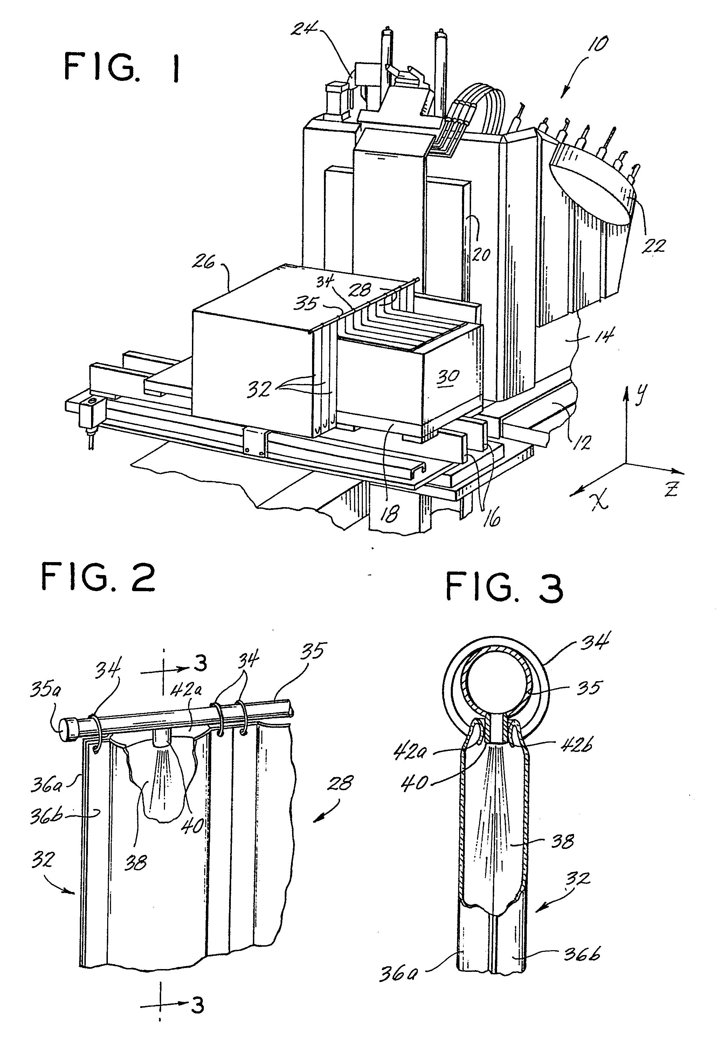

Figure 1 illustrates a conventional horizontal spindle machining center 10 which is configured of a bed 12 which slidably supports a column 14 so that the column is movable on the bed along a rectilinear path of travel, hereinafter designated as the X machine tool axis. Conventional means, in the form of a motorized ball screw and ball nut (not shown) are provided for precisely displacing column 14 on bed 12 along the X axis. Bed 12, in addition to slidably supporting column 14, also supports a pair of parallel spaced apart ways 16 which are each parallel to a second axis, hereinafter designated as the Z axis, which is perpendicular to, but lies in the same plane as the X machine tool axis. Ways 16 slidably support a workpiece holding table 18, which is precisely displaced on the ways along the Z axis by means of a conventional motorized ball screw and ball nut or the like. (not shown)

Machine tool column 14 has a machine tool spindle head 20 slidably mounted on the face of the column adjacent to ways 16 so that the spindle head can move on the face of the column along a rectilinear path, hereinafter designated as the Y axis, which is orthoganal to each of the X and Z axes. Conventional means, in the form of a motorized ball screw and ball nut or the like, (not shown) are provided for precisely displacing spindle head 20 along column 14 so that the spindle head overlies machine tool table 18. A rotary driven spindle (not shown) is journaled into spindle head 20 and is adapted to carry a cutting tool therein. The cutting tools carried by the spindle are stored in a tool storage drum 22 carried by the column and are transferred between the drum and the spindle by an automatic tool changer 24. The movement of the machine tool column, worktable spindle head, as well as the rotation of the spindle and the operation of the automatic tool changer are controlled by a control unit (not shown) such as are well known in the art.

An enclosure 26, having an opening in both ends thereof and an opening in its rear face, is fastened to bed 12 and overlies ways 16 so as to encompass the space surrounding the machine tool spindle. The height of the enclosure is made greater than the range of spindle head travel along the Y axis so as not to interfere with machine tool operation. The function of enclosure 26 is to confine the dispersion of coolant which is released either through the spindle itself or through a separate set of coolant ducts as well as to confine the dispersion of chips produced during a machining operation. Overlying the opneing at each end of enclosure 26 is a separate one of flexible strip curtains or doors 28 (only one of which is shown) which are each configured in accordance with the present invention. Each flexible strip curtain 28 advantageously allows passage of work table 18 and a workpiece 30 thereon through the curtain into or out of the enclosure while providing an obstruction across the enclosure opening during intervals other than when the work table and workpiece thereon are passing through the door.

The details of flexible strip curtain 28 are depicted in Figures 2 and 3. As illustrated, each curtain 28 is comprised of a plurality of flexible strip members 32 (only one of which is shown), each flexible strip member being supported parallel to and contiguous with adjacent parallel strip members by a pair of rings 34 which circumscribe a conduit or pipe 35 fastened to the end of the enclosure adjacent to the top of the enclosure opening so that the pipe is parallel to the X machine tool axis. Pipe 35 is sealed at its outwardmost end distal from the machine tool by a cap 35a and is coupled at its opposite end to a source of compressed air (not shown). As will be described hereinafter, openings are provided in the pipe for expelling the compressed air carried by the pipe into the flexible strip members 32.

In practice, each flexible strip member 32 is fabricated of a pair of rectangular strips 36a and 36b of flexible impermeable material such as rubber or plastic. The two strips are adjoined at their side and bottom edges in face-to-face relationship so as to form a pocket 38 therebetween which is open at its top. The length of each of strips 36a and 36b comprising each flexible strip member is slightly greater than the height of the enclosure opening and is typically much greater than the strip width so that when the pocket between the strips is filled with air, the strip member is urged vertically downwardly.

Extending into the opening of pocket 38 between strips 36a and 36b of each strip member is a separate pipe nipple 40 which, as best illustrated in Figure 3, are in communication with pipe 35. Thus, each nipple is operative to conduct the compressed air forced through the pipe into its associated pocket 38 of the flexible strip member so as to fill the pocket with air. As the pocket fills with air, the associated strip member 32 becomes more rigid and is urged into its rectilinear configuration. Since the strip is depending from the conduit 35, it assumes a position in a vertical plane across the opening of the enclosure. Each of the strips 36a and 36b which comprise strip member 32 is provided with a separate one of cuffs or flaps 42a and 42b, respectively at its upper end, which forms a loose fitting coupling with nipple 40 so that most of the volume of air conducted through the nipple fills the pocket rather than escaping through the space that would otherwise exist between each strip and the nipple.

The above-described construction of flexible strip curtain 28 yields an improved door for closing the openings into a machine tool work area enclosure. The flexible strip members 32 of the curtain 28 allow passage of the machine tool worktable and workpiece thereon through the door without the need for any complex opening and closing mechanisms. The strip members of flexible strip curtain 28 will drape across the top of the workpiece as the latter passes through the opening. However, the admission of compressed air into the conduit 35 will provide a flow of air into the several pockets 38 of the flexible strip members 32 to urge the latter into their normal position, depending from the conduit 35 in a vertical plane. In doing so, the portion of the strip member 30 overlying the workpiece, in the manner shown in Figure 1, will be withdrawn from the workpiece and shifted to its normal vertical position. In this position, it cooperates with the other strip members 32 to form the curtain 28 which effectively obstructs the passage of the enclosure, to interfere with the escape of coolant and machining chips during the machining operation.

Although the illustrative embodiment of the invention has been described in considerable detail for the purpose of fully disclosing a practical operative structure incorporating the invention, it is to be understood that the particular apparatus shown and described is intended to be illustrative only and that various features of the invention may be incorporated in other structural forms without departing from the spirit and scope of the invention as defined in the subjoined claims.

0098206

C L A I M S

1. A closure for an opening in an enclosure(26), a flexible curtain(28) depending from the top of the opening to normally hang in a vertical plane to serve as a flexible closure over the opening through which objects (30) can pass to enter and exit from the enclosure(26), pockets (38) formed in said flexible curtain(28) a source of gas under pressure, and means (35,40) selectively directing said gas from said source into said pockets(32) to eliminate distortions in the curtain(28) and urge it into its normal flat configuration in the vertical plane.

2. A closure according to claim 1 wherein said flexible curtain(28) is formed of a plurality of separate flexible strip members (32) that depend from the top of the opening with said strips (32) hanging in a vertical plane parallel and adjacent to each other to form said curtain(28), and one of said pockets(38) extends along the length of each of said strips (32) with its opening at the top end of its associated strip(32), and said directing means (35,40) admits the air into said pockets(38) through the top opening to urge the flexible strip(32) into its rectilinear configuration in the vertical plane.

3. A closure according to claim 2 wherein said directing means (35,40) comprises a horizontal conduit(35) extending across the top of the opening and being in communication with said source of gas under pressure, and a separate conduit(40) for each of said strip(32) members in communication with said horizontal conduit(35) and positioned to direct the gas therefrom into the pocket(38) of its associated strip (32) member.

1/1

0098206

FIG. 1

FIG. 2

FIG. 3